# EUROPÄISCHE PATENTANMELDUNG

(11) **EP 2 458 325 A2**
(43) Veröffentlichungstag der Anmeldung: **30.05.2012**
(21) Anmeldenummer: 11188485.4
(22) Anmeldetag: 09.11.2011
(51) Int. Cl.: G01C 3/08

(54) **Distanzmessgerät und Vermessungssystem**

(30) Priorität: 30.11.2010 DE 102010062161
(71) Anmelder: HILTI Aktiengesellschaft, 9494 Schaan (LI)
(72) Erfinder: Gogolla, Torsten, 9494 Schaan (LI); Hofer, Johann, 6850 Dornbirn (AT); Tiefenthaler, Stefan, 6812 Meiningen (AT)

(57) **Zusammenfassung**

Die Erfindung betrifft ein Distanzmessgerät (100), insbesondere in Form eines Handgeräts, für eine berührungslose Messung eines Abstands zu einem Zielobjekt (200), aufweisend: ein Gehäuse (10), insbesondere ein zur händischen Benutzung ausgebildetes Gehäuse (10); eine im Gehäuse (10) angeordnete, optische Messstrahlung (1) nutzende Messeinrichtung (20), mittels welcher der Abstand zum Zielobjekt (200) berührungslos messbar ist, insbesondere mittels einer Laufzeitmessung, mit: einer Strahlungseinheit, insbesondere Lasereinheit (21), einer Optikeinheit (OE) mit Optikelementen wenigstens umfassend: eine Sende- und Empfangsoptik (22, 23), einen eine optische Achse aufweisenden optischen Sendepfad (24) zur Aussendung von Messstrahlung (1) auf das Zielobjekt (200), einen eine optische Achse aufweisenden optischen Empfangspfad (25) zum Empfang von vom Zielobjekt (200) reflektierter und/oder gestreuter Messstrahlung (2). Erfindungsgemäß ist vorgesehen, dass wenigstens ein den optischen Sendepfad (24) beeinflussendes Optikelement beweglich zu einer Ausgangsposition ist, ein Bewegungssensor (90) ausgebildet ist, eine Bewegung des Gehäuses (10) während der Messung zu erfassen; wobei das wenigstens eine bewegliche Optikelement aus der Ausgangsposition in eine veränderliche Kompensationsposition derart bewegbar ist, dass der Sendepfad (24) unter Kompensation der Bewegung des Gehäuses (10) während der Messung auf eine raumfeste Position stabilisierbar ist.

## Beschreibung

### Technisches Gebiet

Die Erfindung betrifft ein Distanzmessgerät, insbesondere in Form eines Handgeräts, für eine berührungslose Messung eines Abstands zu einem Zielobjekt gemäß dem Oberbegriff des Anspruchs 1.

### Stand der Technik

Ein Distanzmessgerät der eingangs genannten Art findet insbesondere Anwendung als handgehaltener Laserdistanzmesser. Eine berührungslose Messung eines Abstands zu einem Zielobjekt erfolgt zumeist unter Nutzung einer optischen Messstrahlung, wie z.B. Laserstrahlung. Grundsätzlich sind - unabhängig von der verwendeten Messstrahlung - unterschiedliche Verfahren zur Abstandsmessung bekannt, beispielsweise lässt sich ein Abstand zu einem Zielobjekt berührungslos unter Verwendung einer Laufzeitmessung, einer Phasenmessung oder einer Lasertriangulation bestimmen. Zur Umsetzung solcher oder ähnlicher Verfahren sieht ein Gehäuse des Messgeräts eine im Gehäuse angeordnete optische Messstrahlung nutzende Messeinrichtung vor, mittels welcher der Abstand zum Zielobjekt berührungslos messbar ist. Eine beispielhafte, vorteilhaft ausgebildete Messeinrichtung zur berührungslosen Abstandsmessung über eine Laufzeitmessung ist beispielsweise in DE 101 12 833 C1 beschrieben. Diese weist eine Strahlungseinheit in Form einer Lasereinheit auf. Darüber hinaus ist eine Optikeinheit mit Optikelementen zur Strahlungsführung vorgesehen. Die Optikelemente umfassen wenigstens eine Sende- und Empfangsoptik, wobei die Sendeund Empfangsoptik als gemeinsames optisches Element oder als getrennte optische Elemente ausgebildet sein können. Eine Sendeoptik ist in einem eine optische Achse aufweisenden optischen Sendepfad zur Aussendung von Messstrahlung auf das Zielobjekt angeordnet. Eine Empfangsoptik ist in einem eine optische Achse aufweisenden optischen Empfangspfad zum Empfang von vom Zielobjekt reflektierter und/oder gestreuter Messstrahlung angeordnet.

Ein eingangs genanntes Verfahren zum berührungslosen Abstandsmessen bzw. eine dazu ausgebildete optische Messeinrichtung lässt sich noch verbessern. Beispielsweise ist in DE 100 51 302 C5 ein Laserentfernungsmessgerät beschrieben, bei welchem Sende- und Empfangspfade parallel ausgerichtet sind und eine Empfindlichkeit der Messeinrichtung erhöht ist. Andere Messeinrichtungen sind beispielsweise bekannt aus EP 1 718 989 B1 oder EP 1 913 416 A1. In EP 0 701 702 ist eine optische Messeinrichtung beschrieben, bei welcher Bildebene und Objektebene gegeneinander verschiebbar sind. DE 196 43 287 offenbart ein Kalibrierungsverfahren für eine optische Messeinrichtung bei einem Messgerät der eingangs genannten Art. Eine andere Möglichkeit eines Ausgleichs von Messunsicherheiten ist in DE 102 32 878 beschrieben, bei welcher Kennlinien von vorbestimmten Messunsicherheiten in einem Speichermedium hinterlegt sind. Ähnlich wie EP 0 701 702 oder DE 100 51 302 wird in DE 101 57 378 durch Eingriff in die optische Messeinrichtung, nämlich unter Auslenkung der optischen Achsen, versucht, eine Messgenauigkeit zu erhöhen.

Wünschenswert ist ein Distanzmessgerät für eine berührungslose Abstandsmessung, bei welchem, insbesondere in Bezug auf Messunsicherheiten eines Handgeräts, eine Messgenauigkeit weiter verbessert ist. Bei einer Abstandsmessung aus der Hand, d.h. insbesondere ohne Verwendung eines Stativs, kann ein Messfleck während der Messung auf dem Messobjekt praktisch nicht stillgehalten werden. Die Messung erfolgt - wie beispielsweise in DE 103 44 586 beschrieben oder in DE 198 04 051 B4 beschrieben - regelmäßig dadurch, dass die optische Messstrahlung der Messeinrichtung auf ein Zielobjekt gerichtet wird und über das Zielobjekt reflektierte optische Messstrahlung in der Messeinrichtung durch Nutzung der oben erläuterten Sende- und Empfangsoptik detektiert wird.

Da jeder Nutzer, mehr oder weniger ausgeprägt, eine - auch als Tremor bezeichnete - natürliche Zitterbewegung besitzt, erweist sich insbesondere die händische Benutzung eines Messgeräts als problematisch bei vergleichsweise schmalen Messobjekten, wie Säulen oder Straßenlaternen oder dergleichen. Problematisch können auch Kanten am Messobjekt sein, wenn auch bei vorliegendem Tremor nicht sichergestellt ist, dass der die Messstrahlung am Zielobjekt reflektierende Messpunkt entweder nur rechts oder nur links von der Kante liegt. Dieses Problem wird umso gravierender, je größer die Entfernung des Messgeräts vom Zielobjekt ist.

### Darstellung der Erfindung

An dieser Stelle setzt die Erfindung an, deren Aufgabe es ist, ein Messgerät für eine berührungslose Messung eines Abstands zu einem Zielobjekt anzugeben, bei der die Messgenauigkeit verbessert und der Dynamikbereich der Messeinrichtung erhöht ist. Insbesondere soll eine Messunsicherheit in Folge von nutzerbedingter Handhabung verringert sein. Insbesondere soll eine vom Nutzer aufgeprägte Bewegung des Messgeräts, insbesondere eine tremorbedingte Bewegung bei einem Messgerät, eine grundsätzliche Messungenauigkeit des Geräts möglichst unbeeinflusst lassen.

Die Aufgabe betreffend das Distanzmessgerät wird durch die Erfindung mittels eines Distanzmessgeräts der eingangs genannten Art gelöst, bei dem erfindungsgemäß die Merkmale des Anspruchs 1 vorgesehen sind.

Die Erfindung geht von der Überlegung aus, dass sich jenseits einer der Messmethode inhärenten Messungenauigkeit ein Großteil der Messunsicherheiten bei einem Distanzmessgerät der eingangs genannten Art durch eine Bewegung des Gehäuses während der Messung ergibt - dies trifft insbesondere für ein Handgerät zu. Weiter geht die Erfindung von der Überlegung aus, dass sich solche Bewegungen in einem gewissen Dynamikbereich abspielen, der einerseits vom Nutzer womöglich nicht wahrnehmbar ist und andererseits dennoch einen Einfluss auf die Messung hat, also auch im Rahmen eines Bewegungssensors technisch erfassbar ist. Dieses erkennend schlägt das Konzept der Erfindung vor, dass wenigstens ein den optischen Sendepfad beeinflussendes Optikelement beweglich zu einer Ausgangsposition ist und ein Bewegungssensor ausgebildet ist, eine Bewegung des Gehäuses während der Messung zu erfassen. Aufbauend auf diese Kombination schlägt das Konzept der Erfindung vor, dass das wenigstens eine bewegliche Optikelement aus der Ausgangsposition in eine Kompensationsposition bewegbar ist. Die Bewegung soll derart geregelt sein, dass der Sendepfad - außerhalb des Gehäuses - unter Kompensation der Bewegung des Gehäuses während der Messung auf eine raumfeste Position stabilisierbar ist. Mit Vorteil versehen nutzt die Erfindung die Vorteile eines Bewegungssensors zur Erfassung einer Bewegung des Gehäuses. Die Signale des Bewegungssensors können genutzt werden, um ein bewegliches Optikelement zu einer geeigneten Gegenbewegung zu veranlassen, d.h. derart, dass der Sendepfad unter Kompensation der Bewegung des Gehäuses während der Messung auf eine raumfeste Position stabilisierbar ist.

In einer besonders bevorzugten Weiterbildung ist vorgesehen, dass mittels einer eingangs mit dem Bewegungssensor und ausgangs mit einem Optikaktor verbundenen Steuereinheit ein vom Bewegungssensor bereitgestelltes Bewegungssignal in ein Aktorsignal für den Optikaktor umsetzbar ist. Insbesondere ist über den Optikaktor das bewegliche Optikelement nach Maßgabe des Aktorsignals bewegbar. Mit anderen Worten umfasst die Weiterbildung eine Steuereinheit mit einem Regelkreis, der ein Bewegungssignal des Bewegungssensors nutzt, um einen Optikaktor derart anzusteuern, dass das bewegliche Optikelement zu der geeigneten Gegenbewegung veranlasst wird. Mit anderen Worten wird weniger eine raumfeste Position als Stellgröße genutzt als vielmehr die Bewegung des Gehäuses.

Vorteilhaft sind gemäß dem Konzept der Erfindung oder der Weiterbildung, Messergebnisse unbeeinflusst von einer sich aus der Bewegung eines Messpunktes am Zielobjekt ergebende Messunsicherheiten. Insbesondere wird aufgrund der während der Messung raumfesten Stabilisierung des Sendepfads erreicht, dass ein Messpunkt am Zielobjekt ortsfest verbleibt. Dies gilt insbesondere für eine Bewegungs-Dynamik und Bewegungs-Amplitude im Bereich einer natürlichen Zitterbewegung (Tremor) eines Nutzers des Messgeräts. Insbesondere ergibt sich dieser Vorteil bei einem Messgerät in Form eines Handgeräts. Im Ergebnis lässt sich ein Messgerät in vereinfachter Weise präziser und bequemer handhaben, da ein Anpeilen eines Zielobjekts durch einen Nutzer präziser, jedenfalls aber bequemer möglich ist. Insbesondere ist ein Nutzer in der Lage, bei der Messung auch schmale Unebenheiten am Zielobjekt zu erfassen bzw. ist in der Lage, selbst schmale Zielobjekte für längere Zeit sicher anzupeilen. Wenigstens aber wird durch das Konzept der Erfindung eine Schwankungsbreite eines Messsignals erheblich reduziert. Dies führt auch zu einer besseren Ablesbarkeit eines Abstandswerts am Messgerät.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

In einer besonders bevorzugten Ausführungsform ist das bewegliche Optikelement mittels einer im Ganzen beweglichen Optikeinheit - insbesondere mit allen Optikelementen - realisiert. Mit anderen Worten ist die gesamte Optikeinheit aus einer Ausgangsposition in eine Kompensationsposition derart bewegbar, dass der Sendepfad unter Kompensation der Bewegung des Gehäuses während der Messung auf eine raumfeste Position stabilisierbar ist. Insbesondere kann dazu vorgesehen sein, dass alle Optikelemente zusammen und mit gleichem Maß nach Maßgabe eines Aktorsignals über einen Optikaktor bewegbar sind - z.B. kann eine Plattform der Optikeinheit oder dergleichen Verbundmittel aller Optikelemente zu einer geeigneten Gegenbewegung veranlasst werden. Ebenso, zusätzlich oder alternativ, besonders bevorzugt und ebenso gleichermaßen anwendbar für die im Folgenden erläuterten Varianten kann das bewegliche Optikelement separat von einer Sende- und Empfangsoptik, insbesondere völlig separat von der Optikeinheit als solcher, gebildet sein. Beispielsweise eignet sich als bewegliches Optikelement ein Spiegel oder dergleichen bewegliches ablenkendes Optikelement im Sende- und/oder Empfangspfad. Um den Sendepfad unter Kompensation der Bewegung des Gehäuses während der Messung auf einer raumfesten Position zu stabilisieren kann vorteilhaft eine Optikeinheit in bewährter Weise hergestellt werden und zusätzlich das bewegliche Optikelement zur Verfügung gestellt werden.

Die optische Messstrahlung nutzende Messeinrichtung, mittels welcher der Abstand zum Zielobjekt berührungslos messbar ist, kann vorteilhaft in einer sogenannten biaxialen Variante oder vorteilhaft in einer sogenannten koaxialen Variante realisiert sein. Die vorgenannte Benennung bezieht sich dabei auf die relative Anordnung von Sendepfad und Empfangspfad zueinander. Bei der biaxialen Variante ist vorteilhaft vorgesehen, dass der Sendepfad über ein Ausgangselement der Sendeoptik biaxial zum Empfangspfad geführt ist. Das Ausgangselement der Sendeoptik kann vorteilhaft eine Auskoppellinse oder dergleichen sein. Es hat sich bei der biaxialen Variante als besonders vorteilhaft erwiesen, dass das bewegliche Optikelement in Form des Ausgangselements gebildet ist. Mit anderen Worten lässt sich vergleichsweise einfach und mit Vorteil versehen das Ausgangselement der Sendeoptik nach Maßgabe des Aktorsignals bewegen. Dies hat den Vorteil, dass der Sendepfad ohne Eingriff in andere Bereiche der Messeinrichtung unter Kompensation der Bewegung des Gehäuses während der Messung raumfest stabilisierbar ist.

Vorteilhaft kann nach Bedarf auch ein Eingangselement der Empfangsoptik, wie beispielsweise eine Einkoppellinse oder dergleichen, bewegbar sein. Insbesondere kann das Eingangselement über einen mit der Steuereinheit verbundenen Optikaktor nach Maßgabe eines Aktorsignals bewegbar sein. Eine solche Maßnahme hat den Vorteil, dass selbst großamplitudige Sendepfadstabilisierungen möglich sind, ohne dass eine empfangene Signalamplitude dadurch nachteilig beeinflusst würde. Ergänzend kann auch eine Sensorfläche des Empfangspfades ausreichend groß gestaltet sein, sodass eine Detektion von reflektierter und/oder gestreuter Messstrahlung selbst bei einem stabilisierten Sendepfad mit vergleichsweise hoher Stabilisierungsamplitude möglich ist. Mit zunehmender Grösse der Sensorfläche wird durch Umgebungslicht mehr Rauschen generiert, wodurch die Empfindlichkeit abnimmt.

In einer besonders bevorzugten zweiten Variante ist vorgesehen, dass bei der Messeinrichtung der Sendepfad über ein gemeinsames Ausgangselement der Sende- und Empfangsoptik koaxial zum Empfangspfad geführt ist. Beispielsweise kann das gemeinsame Ausgangselement als eine Kollimatorlinse oder dergleichen gebildet sein. Bei dieser Weiterbildung hat es sich als besonders vorteilhaft erwiesen, dass das bewegliche Optikelement in Form des gemeinsamen Ausgangselements gebildet ist. Auf diese Weise lässt sich vergleichsweise einfach der Sendepfad der Messeinrichtung unter Kompensation der Bewegung des Gehäuses während der Messung raumfest stabilisieren. Gleichzeitig wird auch der Empfangspfad entsprechend angepasst, da das bewegliche Optikelement in Form des gemeinsamen Ausgangselements gebildet ist. Eine Stabilisierung des Sendepfades hat praktisch keinen nachteiligen Einfluss auf die Signalhöhe im Empfangspfad.

Vorteilhaft weist im Rahmen dieser Weiterbildung die Optikeinheit einen das bewegliche Optikelement bildenden bewegbaren Strahlteiler im Sende- und Empfangspfad auf. Ein Strahlteiler der genannten Art führt zunächst separat geführte Sende- und Empfangspfade zu einem gemeinsamen Sende- und Empfangspfad zusammen und führt diesen auf ein gemeinsames Ausgangselement der Sende- und Empfangsoptik. Gemäß dieser Weiterbildung kann der bewegliche Strahlteiler aus einer Ausgangsposition in eine Kompensationsposition derart bewegbar sein, dass der Sendepfad - insbesondere ein am Strahlteiler abgelenkt geführter Sendepfad - unter Kompensation der Bewegung des Gehäuses während der Messung raumfest stabilisiert ist.

Vorteilhaft wird der Sendepfad unter Kompensation einer Gehäusebewegung verdreht, d.h. einer Winkelbewegung unterworfen. Im Rahmen einer besonders bevorzugten Weiterbildung - insbesondere für alle oben genannten Varianten - ist das bewegliche Optikelement um wenigstens eine Achse, vorteilhaft zwei Achsen, verdrehbar. Es kann im Rahmen einer Weiterbildung möglich sein, das bewegliche Optikelement um drei Achsen verdrehbar zu gestalten. Der Optikaktor kann im Rahmen dieser Weiterbildung vorteilhaft als ein Drehmotor oder dergleichen gebildet sein. Die Weiterbildung hat erkannt, dass eine Verdrehung einer Messstrahlung grundsätzlich vergleichsweise sensibel hinsichtlich der Signalqualität im Empfangspfad ist. So wurde erkannt, dass eine Verdrehung einer Messstrahlung im Sendepfad um beispielsweise 0,1° in einer Entfernung von 20 m bereits eine Verschiebung des Zielpunktes der Messstrahlung auf einem Zielobjekt von 3,5 cm zur Folge hat. Die Amplitude von 0,1° liegt aber durchaus im Bereich einer Tremorbewegung eines Nutzers. Eine Messung wird durch eine Verdrehung der Messstrahlung regelmäßig unbewusst vom Nutzer beeinflusst. Insbesondere gilt dies bei schlechten Messbedingungen, wie hellem Umgebungslicht und dunkler Zielobjektoberfläche. Bei Zielobjekten, die schmaler als 3,5 cm sind, kann es im Normalfall bereits einige Sekunden dauern, bis ein stabiles Messsignal erreicht ist. Mit der vorgenannten Weiterbildung unter Nutzung eines kompensierend verdrehten Sendepfads wird garantiert, dass ein Zielpunkt am Zielobjekt mit vergleichsweise verringerter Schwankungsamplitude am Zielpunkt verbleibt, d.h. der Sendepfad auf eine raumfeste Position stabilisiert ist.

Vorzugsweise ist im Rahmen dieser Weiterbildung der Bewegungssensor als ein Drehbeschleunigungssensor oder Drehratensensor oder dergleichen gebildet. Insbesondere sollte ein Drehbeschleunigungssensor eine Drehbeschleunigung um wenigstens eine, bevorzugt zwei Achsen, ggf. drei Achsen messen können. Als besonders geeignet haben sich ein MEMS-Drehratensensor (Micro-Electro-Mechanical System) oder ein Gyroskop oder dergleichen anderer miniaturisierter Winkelsensor erwiesen.

Darüber hinaus, insbesondere zusätzlich, hat es sich als vorteilhaft erwiesen, dass das bewegliche Optikelement entlang wenigstens einer, zwei oder drei Achsen verschiebbar ist. Insbesondere kann ein Optikaktor als ein Wegemotor oder dergleichen gebildet sein. Der Bewegungssensor ist im Rahmen dieser Weiterbildung bevorzugt als ein Linearbeschleunigungssensor oder Wegesensor oder dergleichen gebildet. Auch wenn die Verschiebung des Sendepfads als solches einen geringeren Einfluss auf das Empfangssignal hat, so ist der Beitrag dennoch nicht immer vernachlässigbar. Die auf eine Verschiebung des Gehäuses des Messgeräts reagierende und diese kompensierende Stabilisierung des Sendepfads mittels einer Verschiebbewegung - zusätzlich oder alternativ zu einer Drehbewegung - liefert einen weiteren vorteilhaften Beitrag zur Sicherung der Messgenauigkeit.

Konkret kann ein Optikaktor besonders vorteilhaft in Form eines Miniaturmotors, eines Piezoaktors oder eines magnetischen und/oder elektrischen Aktors oder dergleichen gebildet sein. Ein solcher Optikaktor lässt sich vergleichsweise kompakt mit leichter Masse und leicht ansteuerbar in einer optische Messstrahlung nutzenden Messeinrichtung unterbringen.

### Ausführungsbeispiele

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1A, Fig. 1B:: eine schematische Ansicht eines Distanzmessgeräts in Form eines Handgeräts zur berührungslosen Abstandsmessung in einer Frontansicht (Fig. 1A) und einer Seitenansicht (Fig. 1 B);
- Fig. 2A, Fig. 2B:: zwei besonders bevorzugte Varianten des Distanzmessgeräts der Fig. 1 mit variierter Messeinrichtung - in Fig. 2A mit biaxialer Strahlführung und in Fig. 2B mit koaxialer Strahlführung;
- Fig. 3A, Fig. 3B:: eine illustrative Darstellung der Einflüsse einer Geräteverdrehung (Fig. 3A) bzw. Geräteverschiebung (Fig. 3B) auf eine Abstandsmessung;
- Fig. 4:: eine Messeinrichtung mit einer die Messgenauigkeit erhöhenden Sendepfadstabilisierung für ein Messgerät mit einer biaxialen Strahlführung, wobei ein separates Ausgangselement der Sendeoptik in eine geeignete veränderliche Kompensationsposition verschiebbar ist;
- Fig. 5:: eine in Bezug auf Fig. 4 abgewandelte Ausführungsform, bei welcher die gesamte Optikeinheit nach Maßgabe eines Aktorsignals über einen Optikaktor in eine geeignete veränderliche Kompensationsposition verdrehbar ist;
- Fig. 6:: eine Messeinrichtung mit einer die Messgenauigkeit erhöhenden Sendepfadstabilisierung für ein Messgerät mit einer koaxialen Strahlführung, bei welchem ein gemeinsames Ausgangselement der Sende-und Empfangsoptik in eine veränderliche Kompensationsposition derart verschiebbar ist, dass der Sendepfad unter Kompensation der Bewegung des Gehäuses während der Messung auf eine raumfeste Position stabilisierbar ist;
- Fig. 7:: eine in Bezug auf Fig. 6 abgewandelte Ausführungsform, bei welcher die gesamte Optikeinheit nach Maßgabe eines Aktorsignals über einen Optikaktor verdrehbar ist;
- Fig. 8:: eine besonders bevorzugte Ausführungsform, bei welcher ein beweglicher Kippspiegel im Sende- und Empfangspfad einer - biaxialen oder koaxialen - Messeinrichtung in eine veränderliche Kompensationsposition derart verdrehbar ist, dass der Sendepfad unter Kompensation der Bewegung des Gehäuses während der Messung raumfest stabilisiert ist.

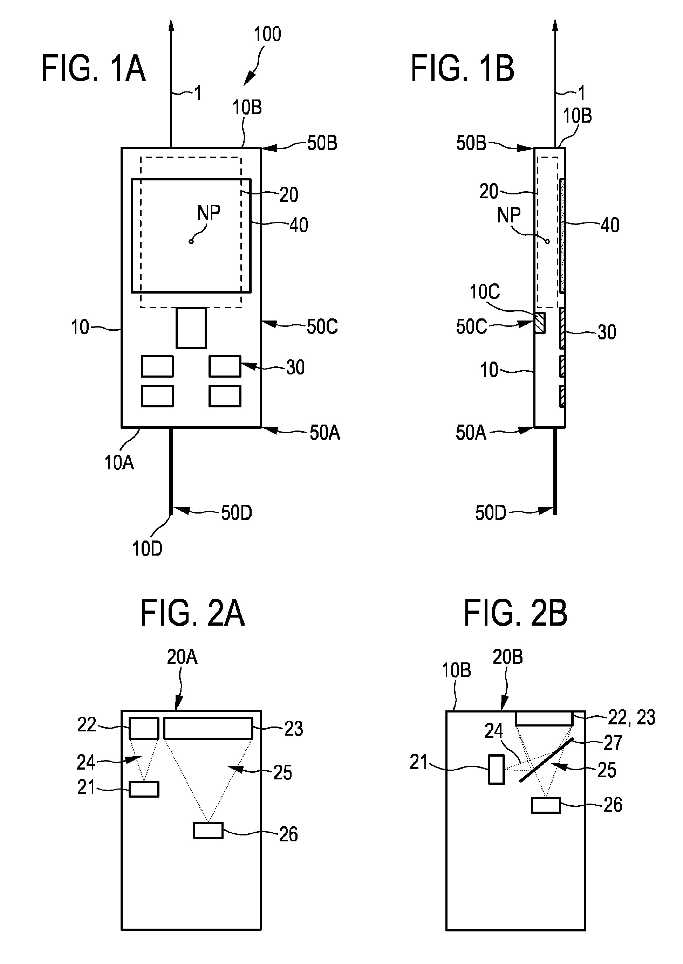

Fig. 1A und Fig. 1 B zeigen ein Distanzmessgerät 100 in Form eines Handgeräts für eine berührungslose Messung eines Abstands zu einem Zielobjekt, wobei das Distanzmessgerät 100 in Fig. 1A in einer Frontansicht auf eine Bedienerseite des Gehäuses 10 gezeigt ist und in Fig. 1 B in einer Seitenansicht des Gehäuses 10 gezeigt ist - die Bestandteile des Distanzmessgeräts 100 sind schematisch dargestellt.

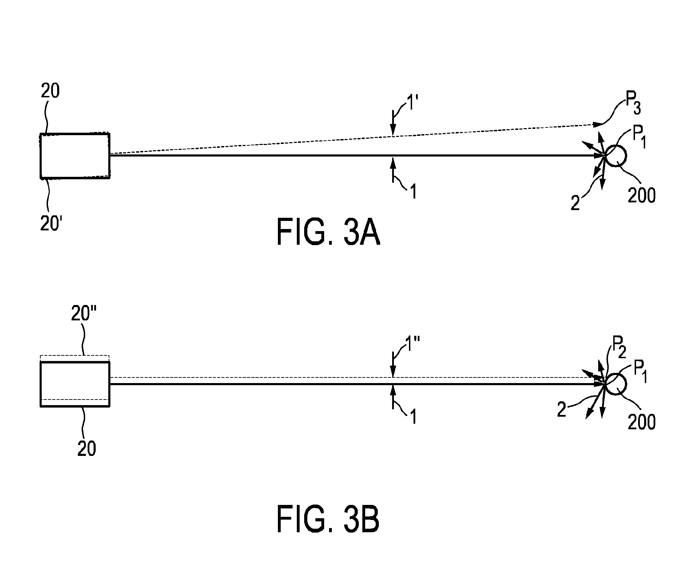

Das auch als handgehaltenes Laserdistanzmessgerät zu bezeichnende Distanzmessgerät 100 weist ein Gehäuse 10 auf, das zur händischen Benutzung ausgebildet ist - vorliegend nicht unwesentlich größer als die Fläche einer Hand mit einer entsprechenden Haptik, ggf. auch Ergonomie; gleichwohl ist das Gehäuse 10 der Einfachheit halber rechteckig dargestellt. Im Gehäuse 10 ist eine auch als Laserdistanzmesseinheit zu bezeichnende optische Messstrahlung 1 nutzende Messeinrichtung 20 untergebracht. Mögliche Varianten der Messeinrichtung 20 sind in Fig. 2A und Fig. 2B dargestellt. Unterschiedliche Handhabungssituationen zur berührungslosen Messung eines Abstands zu einem Zielobjekt sind in Fig. 3 näher dargestellt.

Das Distanzmessgerät 100 weist eine am Gehäuse 10 angeordnete Bedien- und Eingabeanordnung 30 auf, die vorliegend als eine in die Bedienseite des Gehäuses 10 eingelassene Tastatur gebildet ist. Auf der Bedienseite des Gehäuses 10 ist eine Sichtanzeige 40 eingelassen, auf der vorliegend sowohl der gemessene Abstand von einem Zielobjekt als auch der Bedienzustand des Distanzmessgeräts 100 anzeigbar ist. Über die Bedien- und Eingabeanordnung 30 lässt sich die Messeinrichtung 20 bedienen als auch einer der im Folgenden erläuterten Referenzanschläge des Gehäuses 10 auswählen. Während sich nämlich die Messung über die optische Messstrahlung 1 - hier beispielsweise ein Laserstrahl - auf einen gehäuseinternen Referenznullpunkt NP bezieht, wird ein Nutzer regelmäßig den Abstand zum Zielobjekt in Bezug auf einen der Referenzanschläge 50A, 50B, 50C oder 50D messen wollen. Durch Auswahl des Referenzanschlags durch einen Nutzer, beispielsweise über die Bedien- und Eingabeanordnung 30, kann der Abstand zum Zielobjekt unter Verwendung fixer Additionskonstanten auf verschiedene Referenzanschläge bezogen werden. Der wichtigste Referenzanschlag 50A ist an der hinteren Geräteseite 10A angebracht. Zudem gibt es noch andere Referenzanschläge 50B, 50C, 50D, z.B. an der vorderen Geräteseite 10B oder an einer Spitze 10D einer Messverlängerung oder an einer Befestigung 10C für ein Stativgewinde, dessen Mittelpunkt ebenfalls als Referenzanschlag 50C dienen kann.

Bezugnehmend auf Fig. 3A und Fig. 3B können zur Bestimmung eines Abstands zwischen einem Zielobjekt 200 und dem Referenznullpunkt NP des Messgeräts 100 eingangs erläuterte Verfahren zur Anwendung kommen. Vorliegend weist das Distanzmessgerät 100 eine optische Messstrahlung 1 nutzende Messeinrichtung 20 auf, die auf einer Laufzeitmessung basiert. Zwei Varianten der Messeinrichtung 20A, 20B, wie sie für eine Messeinrichtung 20 verwendet werden können, sind beispielhaft in Fig. 2A und Fig. 2B gezeigt. Beide Messeinrichtungen 20A, 20B weisen eine Strahlungseinheit 21, z.B. eine Lasereinheit sowie eine Sendeoptik 22 und eine Empfangsoptik 23 auf. Die Messeinrichtung 20A, 20B weist auch einen eine optische Achse aufweisenden optischen Sendepfad 24 zur Aussendung von Messstrahlung 1, hier ein Laserstrahl, auf das Zielobjekt 200 auf. Außerdem weist die Messeinrichtung 20A, 20B einen eine optische Achse aufweisenden optischen Empfangspfad 25 zum Empfang von vom Zielobjekt 200 reflektierter Messstrahlung 2 auf. Im Empfangspfad 25 ist ein Detektor 26, z.B. eine Fotodiode, zur Detektion der reflektierten und/oder gestreuten Messstrahlung 2 angeordnet. Die Empfangsoptik 23 dient in beiden Fällen der Messeinrichtung 20A, 20B zur Fokussierung der reflektierten und/oder gestreuten Messstrahlung 2 auf den Detektor 26. Die Messeinrichtung 20A ist mit einer separaten Sendeoptik 22 und Empfangsoptik 23 ausgebildet, sodass der Sendepfad 24 und der Empfangspfad 25 nicht überlappen. Diese Anordnung der Pfade 24, 25 in der Messeinrichtung 20A wird auch als biaxial bezeichnet. Im Unterschied dazu ist die Messeinrichtung 20B mit einer koaxialen Anordnung der Pfade 24, 25 ausgebildet, wobei der Sendepfad 24 und der Empfangspfad 25 über einen Strahlteiler 27 zusammengebracht sind und in der beiden gemeinsamen Sende- und Empfangsoptik 22, 23 überlappen. Jeweils im Bereich zwischen Lasereinheit 21 und Strahlteiler 27 bzw. zwischen Detektor 26 und Strahlteiler 27 sind der Sendepfad 24 und der Empfangspfad 25 separat geführt.

Konkret wird - wie weiter aus Fig. 3A und Fig. 3B ersichtlich - bei der als Laserdistanzmesseinheit ausgebildeten Messeinrichtung 20 Messstrahlung 1 einer Lasereinheit 21 in Form einer Laserdiode mit einer optischen Linse der Sendeoptik 22 gebündelt. Die gebündelte Messstrahlung 1 wird ausgehend von der vorderen Gehäuseseite 10B auf das Zielobjekt 200 - beispielsweise dort einen Messpunkt P₁, P₂, P₃ - gerichtet und bildet am Messpunkt P₁, P₂, P₃ einen Lichtfleck. Die reflektierte und/oder gestreute Messstrahlung 2 wird mit einer optischen Linse der Empfangsoptik 23 in der erläuterten Weise auf die aktive Fläche einer Fotodiode des Detektors 26 abgebildet. Die Messeinrichtung 20 kann dabei biaxial oder koaxial ausgeführt sein. Zur Bestimmung der Entfernung des Zielobjekts 200 zum Referenznullpunkt NP des Messgeräts 100 - entsprechend dem Hin- und Rückweg - wird die Messstrahlung 1, vorliegend Laserlicht des Laserstrahls, moduliert. Eine Modulation kann impulsförmig oder auch sinusförmig erfolgen. Die Modulation erfolgt derart, dass die Zeitdifferenz zwischen einer ausgesendeten und empfangenen Messstrahlmodulation messbar ist. Über den Faktor der Lichtgeschwindigkeit kann also auf die einfache Entfernung zwischen dem Referenznullpunkt NP des Messgeräts 100 und dem Zielobjekt 200 geschlossen werden. Diese kann z.B. in einer nicht gezeigten Steuereinrichtung berechnet werden.

Fig. 3A zeigt illustrativ auch die Problematik bei einer Abstandsmessung aus der Hand ohne Verwendung eines Stativs auf. Da jeder Mensch, mehr oder weniger ausgeprägt, eine natürliche Zitterbewegung (Tremor) besitzt - ist hauptsächlich bei schmalen Zielobjekten wie in Fig. 3A das Zielobjekt 200 - die Gefahr groß, dass z.B. bei einer Verdrehung der Messstrahlung 1 um bereits 0,1 ° zu einer verdrehten Messstrahlung 1' während der Messung das Zielobjekt 200 mit dem Messpunkt P₃ nicht mehr getroffen wird. Dieser Umstand trifft bei üblicherweise gehäusefesten Sendepfaden unter tremorbedingter Bewegung des Gehäuses 10 auf. Jedenfalls aber kann ein Messpunkt P₁ eine andere reflektierte und/oder gestreute Messstrahlung 2 aufweisen als ein Messpunkt P₃, sodass die Veränderung der reflektierten und/oder gestreuten Messstrahlung 2 unter Verdrehung des üblicherweise gehäusefesten Sendepfads 24 zu einem anderen Messergebnis führt. Mit diesem Umstand ist praktisch bei jeder Messung zu rechnen, bei der eine verdrehte Messstrahlung 1' von einer mit dem Gehäuse 10 verdrehten Messeinrichtung 20' herrührt. Es wurde erkannt, dass eine Verdrehung der Messeinrichtung 20 zu einer verdrehten Messeinrichtung 20' vergleichsweise kritisch ist. Eine aus Fig. 3B ersichtliche Verschiebung der Messeinrichtung 20 zu einer verschobenen Messeinrichtung 20" ist dabei vergleichsweise unkritisch, hat gleichwohl jedoch auch einen Einfluss. Die verschobene Messeinrichtung 20" führt zwar auch von einer Messstrahlung 1 auf eine verschobene Messstrahlung 1 ", diese hat jedoch bei gleicher Bewegungsamplitude immerhin noch einen Messpunkt P₂ am Zielobjekt 200, der ebenso wie der Messpunkt P₁ reflektierte und/oder gestreute Messstrahlung 2 erzeugt. Dennoch ist natürlich mit einer Veränderung der reflektierten und/oder gestreuten Messstrahlung 2 zu rechnen, sodass auch eine verschobene Messeinrichtung 20" in Folge einer Tremorbewegung des Nutzers zu einer Messungenauigkeit führen kann.

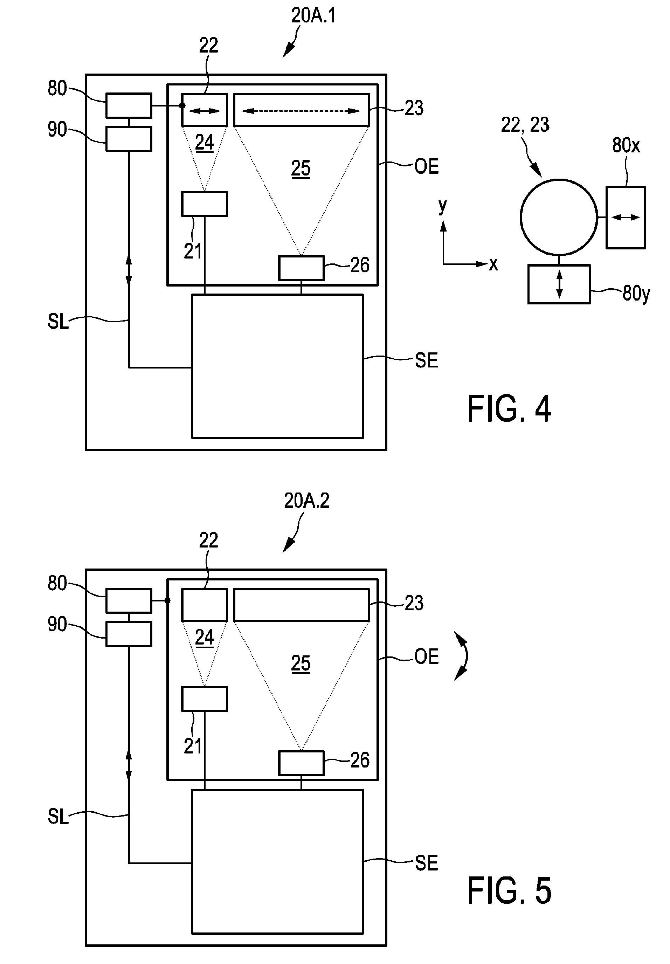

Im Folgenden sind für identische oder ähnliche Teile oder Teile identischer oder ähnlicher Funktion der Einfachheit halber gleiche Bezugszeichen verwendet. Fig. 4 und Fig. 5 zeigen leicht abgewandelte Ausführungsformen gemäß einer ersten Variante einer Messeinrichtung 20A.1 und 20A.2, die in einem Messgerät 100 als Messeinrichtung 20 bzw. unter Weiterbildung der Messeinrichtung 20A der Fig. 2A verwendet werden können gemäß dem Konzept der Erfindung.

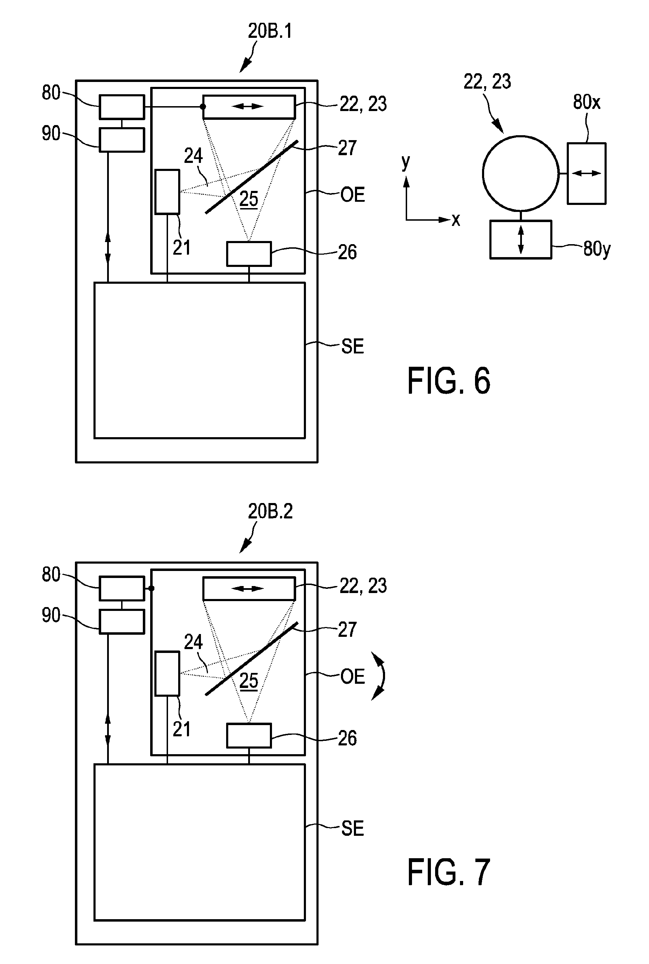

Fig. 6 und Fig. 7 zeigen abgewandelte Ausführungsformen einer Messeinrichtung 20B.1, 20B.2, die anstelle der Messeinrichtung 20 bzw. in Abwandlung der in Fig. 2B dargestellten Messeinrichtung 20B verwendet werden können.

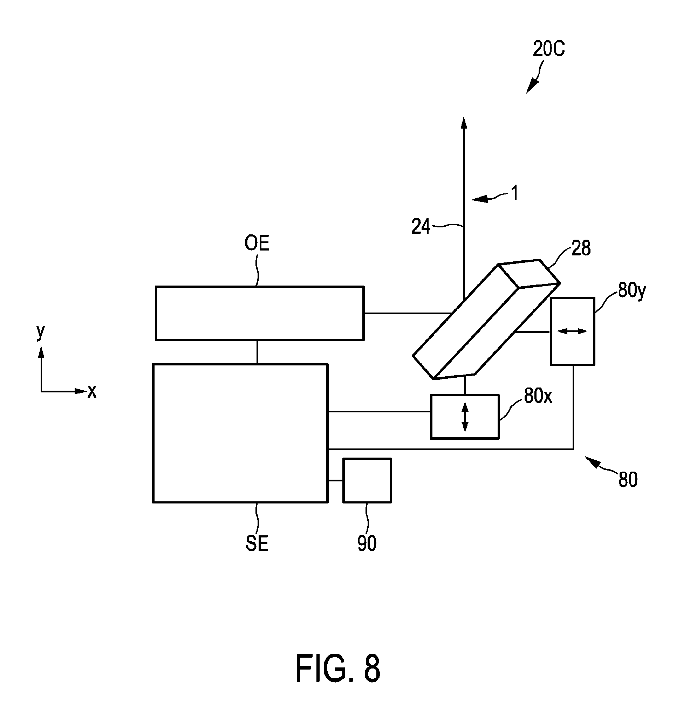

Fig. 8 zeigt eine besonders bevorzugte Ausführungsform einer Messeinrichtung 20C.

Fig. 4 illustriert eine erste bevorzugte Ausführungsform einer Messeinrichtung 20A.1 aufbauend auf der Messeinrichtung 20A der Fig. 2A. Die Messeinrichtung 20A.1 weist eine Optikeinheit OE auf, welche die Sendeoptik 22, die Empfangsoptik 23 sowie die Strahlungseinheit 21 und den Detektor 26 umfasst. An die mit biaxialem Aufbau realisierte Optikeinheit OE ist eine Steuereinheit SE zur Regelung der Strahlungseinheit 21 und des Detektors 26 angeschlossen. Die Sendeoptik 22, vorliegend eine Auskoppellinse, ist beweglich zu einer Ausgangsposition ausgebildet, was durch den Doppelpfeil in der Sendeoptik 22 dargestellt ist. Ein Optikaktor 80 der Messeinrichtung 20A.1 ist an die Sendeoptik 22 angeschlossen und kann diese lateral in zwei Richtungen x, y verschieben, wodurch eine Beeinflussung der über die Sendeoptik 22 ausgekoppelten Messstrahlung 1 erreicht wird. Zusätzlich weist die Messeinrichtung 20A.1 einen Bewegungssensor 90 auf, der ausgebildet ist, eine Bewegung des Gehäuses 10 und/oder der Messeinrichtung 20A.1 während der Messung zu erfassen. Der Bewegungssensor 90 ist vorliegend als ein Drehratensensor realisiert. Darüber kann die Verdrehung des Gehäuses 10 und/oder der Messeinrichtung 20A.1 und damit auch der Messstrahlung 1 sowohl um die y-Achse als auch um die x-Achse während der Messung aufgenommen werden. Als Sensoren eignen sich beispielsweise MEMS-Drehratensensoren oder Gyroskope. Diese können in einachsiger, zweiachsiger oder dreiachsiger Ausführung genutzt werden. Ein Bewegungssignal kann über eine Steuerleitung SL der Steuereinheit SE zugeführt werden und durch die Steuereinheit SE in ein Aktorsignal für den als Wegemotor gebildeten Optikaktor 80 umgesetzt werden. Vorliegend hat dies den Vorteil, dass die Steuereinheit SE digital über einen Prozessor den Optikaktor 80 ansteuern kann. In einer Abwandlung kann das Bewegungssignal des Bewegungssensors 90 auch direkt für den Optikaktor 80, beispielsweise über einen Verstärker und in analoger Form, genutzt werden, um diesen anzusteuern. Im Ergebnis kann das bewegliche Optikelement in Form einer Sendeoptik 22 nach Maßgabe des Aktorsignals bewegt werden - vorliegend in y- und/oder y-Richtung lateral verschoben werden. Hierbei wird ausgenutzt, dass die laterale Verschiebung der Sendeoptik 22 zur optischen Achse eine Winkeländerung der Messstrahlung 1 im Sendepfad 24 impliziert. Konkret kann unter Verwendung des Optikaktors 80 die Sendeoptik 22 in xund/oder in y-Richtung auf Basis der Bewegungssignale als Bewegungssensor 90 als Stellgröße so verschoben werden, dass der Sendepfad 24 außerhalb der Messeinrichtung 20A.1 unter Kompensation der Bewegung des Gehäuses 10 während der Messung auf einer raumfesten Position stabilisiert ist.

In der in Fig. 4 gezeigten Ausführungsform handelt es sich beim Bewegungssensor 90 um einen Drehratensensor. Zusätzlich kann auch die Verschiebung des Gehäuses 10 mit einem MEMS-Beschleunigungssensor in x- und y-Richtung aufgenommen werden. Auch hierbei kann der von der Steuereinheit SE über die Steuerleitung SL angesteuerte Optikaktor 80 mit Hilfe der Bewegungssignale über ein Aktorsignal angesteuert werden.

Vorliegend kann zur Umsetzung der aus Verdrehung und Verschiebung des Gehäuses 10 resultierenden Bewegungssignale in ein Aktorsignal zunächst ein grobes Zwischenergebnis eines gemessenen Abstands zum Zielobjekt 200 genutzt werden. Dadurch kann eine Regelschleife effektiver gestaltet werden. Als Optikaktor 80 eignen sich Miniaturmotoren, Piezoaktoren oder solche auf Basis magnetischer und/oder elektrischer Kräfte. Auch andere Wirkprinzipien für Aktoren, die hier nicht aufgeführt sind, sind denkbar.

Die in Fig. 4 gezeigte Ausführungsform funktioniert besonders gut bei einer durch den gestrichelten Doppelpfeil angezeigten, ebenfalls veränderlichen Bewegung der Empfangsoptik 23. Diese kann durch einen nicht gezeigten, zusätzlichen Aktor oder durch den Optikaktor 80 bewegt werden. Da im Empfangspfad 25 die reflektierte und/oder gestreute Messstrahlung 2 auch bei veränderter Kompensationsposition des Sendepfads 24 auf dem Detektor 26 gehalten wird, lassen sich selbst große Bewegungsamplituden realisieren. Gegebenenfalls kann die Detektorfläche des Detektors 26 ausreichend groß gestaltet werden. Damit ist in jedem Fall eine hohe Empfindlichkeit des Detektors 26 in Bezug auf die reflektierte und/oder gestreute Messstrahlung 2 gewährleistet, obwohl der Sendepfad raumfest stabilisiert ist und eine ständig veränderliche Kompensationsposition einnimmt.

Fig. 5 zeigt eine leicht abgewandelte Messeinrichtung 20A.2, bei welcher die Optikeinheit OE wiederum mittels eines biaxialen Aufbaus realisiert ist. Auch hier dient ein Bewegungssensor 90 in Form eines Drehratensensors dazu, die Verdrehung des Gehäuses 10 als auch der Messeinrichtung 20A.2 sowohl um die y-Achse als auch um die x-Achse während einer Messung aufzunehmen. Die Steuereinheit SE setzt ein entsprechendes Bewegungssignal in ein Aktorsignal für den Optikaktor 80 um und übermittelt dies über die Steuerleitung SL. Um eine Einzelbewegung sowohl der Sendeoptik 22 als auch der Empfangsoptik 23 - wie bei Fig. 4 ggf. erforderlich - zu vermeiden, ist ein Optikaktor 80 vorliegend als ein Drehmotor vorgesehen, um die gesamte Optikeinheit OE um die x- und/oder y-Achse auf Basis der Aktorsignale so zu verdrehen, dass der Winkel der Messstrahlung 1 im Sendepfad 24 im Raum fest stabilisiert ist und so ein Messpunkt P₁ am Zielobjekt 200 raumfest angeordnet ist. Wiederum kann der Optikaktor 80 über die Steuereinheit SE oder über einen nicht gezeigten Verstärker - d.h. digital oder analog - angesteuert werden. Auch hier kann zusätzlich zur Verdrehung des Gehäuses 10 eine Verschiebung des Gehäuses 10 aufgenommen werden. Auch hier kann ein Zwischenergebnis des gemessenen Abstands zu einem Zielobjekt 200 genutzt werden, um den Sendepfad 24 und damit den Messpunkt P₁ auf dem Zielobjekt 200 zu stabilisieren.

Fig. 6 zeigt eine zweite bevorzugte Ausführungsform einer Messeinrichtung 20B.1 basierend auf einem koaxialen Aufbau einer Optikeinheit OE, wie sie bereits in Fig. 2B gezeigt ist. Zusätzlich sind an die Optikeinheit OE wiederum eine Steuereinheit SE und ein Optikaktor 80 als Wegemotor angeschlossen. Wiederum dient die Steuereinheit SE zur Steuerung der Lasereinheit 21 und zur Aufnahme von Detektordaten aus dem Detektor 26. Mittels einer eingangs mit dem Bewegungssensor 90 - vorliegend wiederum in Form eines Drehratensensors der oben beschriebenen Art - und ausgangs mit einem Optikaktor 80 - als Wegemotor - verbundenen Steuereinheit SE ist vorliegend ein vom Bewegungssensor 90 bereitgestelltes Bewegungssignal in ein Aktorsignal für den Optikaktor 80 umsetzbar. Der Optikaktor 80 wirkt wieder auf ein bewegliches Optikelement nach Maßgabe des Aktorsignals, wobei das Optikelement vorliegend in Form einer Sende- und Empfangsoptik 22, 23 in Form einer Kollimatorlinse gebildet ist. Die Kollimatorlinse 22, 23 ist dem überlappenden Sende- und Empfangspfad 24, 25 gemeinsam, wobei die Messstrahlung 1 über die Kollimatorlinse 22, 23 ausgekoppelt wird und die vom Zielobjekt 200 reflektierte und/oder gestreute Messstrahlung 2 über die Kollimatorlinse 22, 23 eingekoppelt wird. Rechts zeigt die Skizze wie in Fig. 4 deutlich, dass der Optikaktor 80 im Grunde zwei Aktorfunktionen umfasst - eine Aktoreinheit 80x und eine Aktoreinheit 80y sind, jeweils für eine laterale Verschiebung in die x- und y-Richtung gebildet. Auch hier wird ausgenutzt, dass eine Verschiebung der Kollimatorlinse der Sende- und Empfangsoptik 22, 23 eine Winkeländerung des kollimierten Laserstrahls impliziert.

Fig. 7 zeigt eine zur Messeinrichtung 20B.1 leicht abgewandelte Messeinrichtung 20B.2, bei welcher - ähnlich wie in Fig. 5 - die gesamte Optikeinheit OE durch den Optikaktor 80 in Form eines Drehmotors gemäß einem Aktorsignal verdreht wird. Dadurch wird die Optikeinheit OE aus der Ausgangsposition in eine veränderliche Kompensationsposition derart verdreht, dass der Sendepfad 24 im ausgekoppelten Bereich außerhalb der Messeinrichtung 20B.1 unter Kompensation der Bewegung des Gehäuses 10 während der Messung raumfest stabilisiert ist.

Fig. 8 zeigt eine dritte Ausführungsform einer Messeinrichtung 20C, die eine Optikeinheit OE, eine Steuereinheit SE, einen Optikaktor 80 und einen Bewegungssensor 90 umfassend einen Drehbeschleunigungssensor und Linearbeschleunigungssensor aufweist. Der Bewegungssensor 90 ist eingangs an die Steuereinheit SE angeschlossen und stellt ein Bewegungssignal - vorliegend in Form eines Drehbeschleunigungs- und Linearbeschleunigungssignals - der Steuereinheit SE zur Verfügung. Die Steuereinheit SE setzt das Bewegungssignal in ein Aktorsignal für den Optikaktor 80 um - letzterer wiederum bestehend aus einer Aktoreinheit 80x und einer Aktoreinheit 80y jeweils für eine Bewegung in die x- und y-Richtung. Aufgrund des Aktorsignals und nach Maßgabe desselben wird wiederum ein bewegliches Optikelement, nämlich bei der in Fig. 8 dargestellten Ausführungsform ein verkippbarer Spiegel 28, aus einer Ausgangsposition in eine veränderliche Kompensationsposition bewegt. Vorliegend erfolgt eine Kippbewegung in x- oder y-Richtung derart, dass der Sendepfad 24 für die Messstrahlung 1 unter Kompensation der Bewegung des Gehäuses 10 während der Messung raumfest stabilisiert ist. Im Unterschied zu den zuvor erläuterten Ausführungsformen ist der verkippbare Spiegel 28 als bewegliches Optikelement separat von der zuvor erläuterten Optikeinheit OE und separat von einer Sende- und Empfangsoptik 22, 23 gebildet. Somit kann die Optikeinheit OE vorliegend nach Beispiel der in Fig. 2A dargestellten Messeinrichtung 20A biaxial oder nach Beispiel der in Fig. 2B dargestellten Messeinrichtung 20B koaxial aufgebaut sein. Die Messstrahlung 1 im Sendepfad 24 wird über die Optikeinheit OE abgestrahlt und gelangt über den verkippbaren Spiegel 28 auf den Messpunkt P₁ des Zielobjekts 200. Mit Hilfe eines Bewegungssensors 90 - hier Kombination aus Drehratensensor und Wegsensor - wird von der Steuereinheit SE die Verdrehung des Gehäuses 10 in eine kompensierende, veränderliche Kompensationsposition des verkippbaren Spiegels 28 digital umgesetzt. Auch hier kann anstelle der digitalen Ausführung mit einer Steuereinheit SE der verkippbare Spiegel 28 über einen Verstärker direkt von dem Optikaktor 80 angesteuert werden. Dazu ist, wie bei den zuvor erläuterten Ausführungsformen, der Verstärker geeignet ausgebildet, um aus dem Bewegungssignal ein analoges Optikaktorsignal zu erzeugen.

## Patentansprüche

1. Distanzmessgerät (100), insbesondere in Form eines Handgeräts, für eine berührungslose Messung eines Abstands zu einem Zielobjekt (200), aufweisend:
- ein Gehäuse (10), insbesondere ein zur händischen Benutzung ausgebildetes Gehäuse (10);
- eine im Gehäuse (10) angeordnete, optische Messstrahlung (1) nutzende Messeinrichtung (20), mittels welcher der Abstand zum Zielobjekt (200) berührungslos messbar ist, insbesondere mittels einer Laufzeitmessung, mit:
einer Strahlungseinheit, insbesondere Lasereinheit (21),
einer Optikeinheit (OE) mit Optikelementen wenigstens umfassend:
eine Sende- und Empfangsoptik (22, 23),
einen eine optische Achse aufweisenden optischen Sendepfad (24) zur Aussendung von Messstrahlung (1) auf das Zielobjekt (200),
einen eine optische Achse aufweisenden optischen Empfangspfad (25) zum Empfang von vom Zielobjekt (200) reflektierter und/oder gestreuter Messstrahlung (2),
**dadurch gekennzeichnet, dass**
- wenigstens ein den optischen Sendepfad (24) beeinflussendes Optikelement beweglich zu einer Ausgangsposition ist,
- ein Bewegungssensor (90) ausgebildet ist, eine Bewegung des Gehäuses (10) während der Messung zu erfassen; wobei
- das wenigstens eine bewegliche Optikelement aus der Ausgangsposition in eine veränderliche Kompensationsposition derart bewegbar ist, dass der Sendepfad (24) unter Kompensation der Bewegung des Gehäuses (10) während der Messung auf eine raumfeste Position stabilisierbar ist.

2. Distanzmessgerät (100) nach Anspruch 1 **dadurch gekennzeichnet, dass** mittels einer eingangs mit dem Bewegungssensor (90) und ausgangs mit einem Optikaktor (80) verbundenen Steuereinheit (SE) ein vom Bewegungssensor (90) bereitgestelltes Bewegungssignal in ein Aktorsignal für den Optikaktor (80) umsetzbar ist, wobei über den Optikaktor (80) das bewegliche Optikelement nach Maßgabe des Aktorsignals bewegbar ist.

3. Distanzmessgerät (100) nach Anspruch 1 oder 2 **dadurch gekennzeichnet, dass** das bewegliche Optikelement mittels einer im Ganzen beweglichen Optikeinheit (OE) gebildet ist, die insbesondere nach Maßgabe eines Aktorsignals über einen Optikaktor (80) beweglich ist.

4. Distanzmessgerät (100) nach einem der Ansprüche 1 bis 3 **dadurch gekennzeichnet, dass** der Sendepfad (24) über ein Ausgangselement der Sendeoptik (22), insbesondere eine Auskoppellinse, biaxial zum Empfangspfad (25) geführt ist und das bewegliche Optikelement in Form des Ausgangselements gebildet ist.

5. Distanzmessgerät (100) nach Anspruch 4 **dadurch gekennzeichnet, dass** ein Eingangselement der Empfangsoptik (23), insbesondere eine Einkoppellinse, beweglich ist, insbesondere über einen mit der Steuereinheit (SE) verbundenen Optikaktor (80) nach Maßgabe eines Aktorsignals bewegbar ist.

6. Distanzmessgerät (100) nach einem der Ansprüche 1 bis 3 **dadurch gekennzeichnet, dass** der Sendepfad (24) über ein gemeinsames Ausgangselement der Sende- und Empfangsoptik (22, 23), insbesondere über eine Kollimatorlinse, koaxial zum Empfangspfad (25) geführt ist und das bewegliche Optikelement in Form des gemeinsamen Ausgangselements gebildet ist.

7. Distanzmessgerät (100) nach Anspruch 6 **dadurch gekennzeichnet, dass** die Optikeinheit (OE) einen das bewegliche Optikelement bildenden beweglichen Strahlteiler (27) im Sende- und Empfangspfad (24, 25) aufweist, insbesondere einen verschiebbaren und/oder verkippbaren Strahlteiler (27).

8. Distanzmessgerät (100) nach einem der Ansprüche 1 bis 7 **dadurch gekennzeichnet, dass** das bewegliche Optikelement separat von einer Sende- und Empfangsoptik (22, 23), insbesondere als ein Spiegel (28), im Sendepfad (24) und/oder Empfangspfad (25) gebildet ist.

9. Distanzmessgerät (100) nach einem der Ansprüche 1 bis 8 **dadurch gekennzeichnet, dass** das bewegliche Optikelement um wenigstens eine Achse verdrehbar ist, insbesondere der Optikaktor (80) als ein Drehmotor oder dergleichen gebildet ist.

10. Distanzmessgerät (100) nach einem der Ansprüche 1 bis 9 **dadurch gekennzeichnet, dass** der Bewegungssensor (90) als ein Drehbeschleunigungssensor oder Drehratensensor oder dergleichen gebildet ist.

11. Distanzmessgerät (100) nach einem der Ansprüche 1 bis 10 **dadurch gekennzeichnet, dass** das bewegliche Optikelement entlang wenigstens einer Achse verschiebbar ist, insbesondere der Optikaktor (80) als ein Wegemotor oder dergleichen gebildet ist.

12. Distanzmessgerät (100) nach einem der Ansprüche 1 bis 11 **dadurch gekennzeichnet, dass** der Bewegungssensor (90) als ein Linearbeschleunigungssensor oder Wegesensor oder dergleichen gebildet ist.

13. Distanzmessgerät (100) nach einem der Ansprüche 1 bis 12 **dadurch gekennzeichnet, dass** der Optikaktor (80) in Form eines Miniaturmotors, Piezoaktors, magnetoelektrischen Aktor oder dergleichen gebildet ist.
